# EUROPEAN PATENT SPECIFICATION

(11) **EP 0 913 097 B1**
(45) Date of publication and mention of the grant of the patent: **12.01.2005**
(21) Application number: 97119011.1
(22) Date of filing: 31.10.1997
(51) Int. Cl.: A23L 1/23, A23L 1/328, A23L 1/20

(54) **Production of a hydrolysate**
Herstellung eines Hydrolysates
Production d'un hydrolysat

(43) Date of publication of application: 06.05.1999
(73) Proprietor: SOCIETE DES PRODUITS NESTLE S.A., 1800 Vevey (CH)
(72) Inventor: Lim, Bee Gim, 640426 Singapore (SG); Ng, Tsui Luan, 08-330 Singapore (SG); Heyland, Sven, 8534 Weiningen (CH); Dac, Thang Ho, 1052 Le Mont-s, Lausanne (CH)
(74) Representative: Thomas, Alain

(56) References cited:
- EP-A- 0 417 481
- US-A- 4 308 284
- US-A- 4 587 127
- DATABASE WPI Section Ch, Week 9343 Derwent Publications Ltd., London, GB; Class D13, AN 93-338881 XP002023697 & JP 05 244 897 A (SAITAMA KEN) , 24 September 1993

## Description

The present invention relates to a process for the production of a hydrolysate, more particularly to the production of hydrolysate by the biological hydrolysis of protein containing material.

Hydrolysed proteins have been known for use as seasonings in food systems for centuries in the Far East in the form of soya sauce which traditionally has been prepared by fermentation for a long period of time, usually several months. In producing soya sauce, plant protein containing materials such as cooked soya beans or defatted soy grits together with carbohydrates are inoculated with Aspergilli and the semi solid product is fermented for 2 days to make Koji during which time enzymes are produced which are able to hydrolyse protein and carbohydrates in the moromi stage. The fermented Koji is mixed with a solution of common salt to give moromi which is fermented for 4 to 8 months by the soya lactic acid bacteria and soya yeasts from which the soya sauce is obtained by removing the insoluble fractions from the fermented moromi.

About 100 years ago, a more rapid method of hydrolysing proteins for producing seasonings was developed using hydrochloric acid in which the time required is only a few hours. However, in recent years, the use of acid hydrolysed plant protein (HPP) in culinary applications has been under criticism due to the presence of chloro-compounds which arises from the acid process. Therefore, attempts have been made to develop HPP replacements which can be used as body-givers in culinary applications. Soya sauce is one such suitable replacement. However, owing to the differences in the raw materials and the processing methods involved, the two products, HPP and soya sauce, have some differences in terms of chemical composition and flavour profile. Dosage of soya sauce which can be used as an HPP replacement is limited due to its "fermented" note. The different processing procedures also result in a significant variation in the degree of hydrolysis of the protein containing material to the amino acids. Soya sauce has a lower amino acid content than HPP and this leads to a significantly weaker body in soya sauce than in HPP.

In our co-pending EP-A-96202309.9, we describe a process for the production of a seasoning which comprises preparing a fermented protein koji from a protein containing material and a carbohydrate, hydrolysing the fermented protein koji at a temperature between 15°C and 60°C and a pH of from 4.5 to 10 for a period of from 6 hours to 28 days characterised in that inoculation with a culture of a lactic acid bacteria at an inoculation density of from 10³ to 10⁷cfu/g of fermented protein koji is carried out either in the fermented protein koji stage or in the hydrolysis stage. US-A-4 308 284 describes a process for producing koji for a fermented food product.

We have now found surprisingly that if the lactic acid bacteria is Lactobacillus sake (L.sake) and that inoculation is carried out at the beginning of the fermentation process, a hydrolysate is produced which has a very much stronger meaty note than hydrolysates produced using other lactic acid bacteria or when inoculating with L.sake after the fermentation stage. Although not wishing to be bound by theory, we believe that during fermentation, L.sake produces specific enzymes which convert sulphur containing amino acid of the protein substrate, e.g. cysteine into hydrogen sulphide which acts as a precursor for the building blocks for meaty note development.

Accordingly, the present invention provides a process for the production of a hydrolysate which comprises fermenting a protein containing material and a carbohydrate to form a Koji, hydrolysing the fermented Koji at a temperature between 2°C and 50°C and a pH of from 5.6 to 7.0 for a period of from 1 to 20 days characterised in that inoculation with a culture of L.sake at an inoculation density of from 10³ to 10⁷ cfu/g of fermented Koji is carried out at the beginning of the fermentation stage.

During hydrolysis, it should be understood that generally, longer periods of time are required at lower temperatures and vice versa.

The fermented Koji is prepared by a process similar to the conventional soya sauce process which comprises, for example, inoculating a protein containing material and a carbohydrate with, in addition to a culture of L.sake, a culture of Aspergillus oryzae and/or Aspergillus sojae on a culture bed to form the fermented Koji. The L.sake may be added before or after the culture of Aspergillus but when added after the culture of Aspergillus, the addition of the L.sake should take place soon after the commencement of fermentation. L. sake could also be added soon after the commencement of fermentation, e.g. within 1 hour, preferably within 30 minutes, more preferably within 15 minutes, even more preferably within 5 minutes, and especially within 1 minute. The protein containing material is advantageously a plant protein material containing a high proportion of cysteine, e.g. from 0.5 to 3% and preferably from 0.75 to 2% by weight, for instance, soya, wheat germ, corn gluten or rice gluten but is preferably wheat gluten, to produce an increased level of sulphide in the hydrolysate and thus an increased meaty note. The degree of meaty note may also be varied by using a Koji substrate with different proportions of protein and carbohydrate, e.g. a substrate containing from 30 to 100% of protein, preferably from 70 to 90% of protein. The plant protein containing material is advantageously cooked and is preferably used in solid particulate form for enabling the mould of Aspergillus oryzae and/or Aspergillus sojae to grow on the surface of the particles and eventually penetrate into the particles. The particles of the plant protein material, which may be in the form of pellets, preferably have an average diameter of from 2 to 10mm, preferably from 3 to 8mm and especially from 4 to 7mm. The Koji is conveniently fermented in the solid state.

During the fermentation stage, the L.sake grows rapidly and dominates the flora at a level of 10⁸ to 10⁹cfu/g at the end of the fermentation, together with A.oryzae. The quality of the Koji is hence clean with respect to other possible contaminants. By adding the L.sake at the beginning of the fermentation, the control of the microflora is controlled right from the start without giving any chance for the contaminants to multiply. The high level of bacteria in the fermented Koji increases the protection against the growth of undesirable microorganisms in the subsequent hydrolysis.

The hydrolysis of the fermented protein koji in the presence of water may be carried out in the absence or presence of salt and advantageously with constant agitation. Preferably, the hydrolysis is carried out in the absence of salt at a temperature from 30° to 37°C over a period of from 2-5 days in order to maximise the enzyme activity of L.sake, which leads to the production of a stronger meaty flavour in the hydrolysate. When salt is present, the amount may be up to 100% by weight based on the weight of the fermented Koji.

If desired, additional protein containing a high proportion of cysteine, e.g. wheat gluten, may be added at the beginning of hydrolysis to increase the meaty note.

At the end of the hydrolysis, the level of the reducing sugar is very low, usually less than 0.3% and therefore, moromi maturation can be eliminated. As a result of this, the whole production time may be shortened by from 1 to 6 weeks.

After the hydrolysis, the hydrolysed fermented koji together with the culture of L.sake may be pressed to separate a liquid sauce from a solid residue. The liquid sauce is advantageously pasteurised e.g. at a temperature of from 90° to 140°C for a period of from 15 seconds to 30 minutes and then filtered to give a liquid seasoning. If desired, salt may be added either before or after pressing or filtering to give a product having a salt content of 0-60% by weight based on the weight of dried matter. If desired, the liquid sauce may be made into a powder for instance, by concentration, then dried, e.g. vacuum dried to a low moisture content and finally milled into a powder to give a solid seasoning.

The hydrolysate produced by the process of the present invention may be used as a base, in either liquid?, paste or solid form, for an aromatisation agent for culinary products. A paste may be produced having a dry matter content of from 35 to 55% by weight which comprises drying the hydrolysate and mixing with water, salt, reducing sugar and optionally a sulphur containing amino acid or thiamine, to give a paste containing, on a dry matter basis, from 24 to 97% of the hydrolysate, 2 to 40% salt, 1 to 4% reducing sugar and from 0 to 2% of a sulphur containing compound, e.g. an amino acid such as cysteine or thiamine. If desired, this paste may be heated at 80 to 150°C, preferably from 90 to 110°C for from 1 minute to 4 hours, preferably from 1 to 2 hours. The heated paste may afterwards be dried to a residual water level of up to 2%.

The hydrolysates of the present invention may be used in process flavour applications, e.g. beef and chicken, body givers for culinary products and as ingredients for HPP replacers. When the sauce powder is reconstituted in water, the product has a much lighter colour, a strong meaty flavour and is more neutral with respect to the typical fermented note found in the standard wheat gluten sauce.

The present invention will now be further illustrated by the following Examples in which parts and percentages are given by weight.

### Example 1

A mixture of wheat gluten and wheat bran (93:7) was extruded through a Clextral extruder to obtain pellets having an average diameter of 5mm with a porous structure.

75 kg of the extrudates were mixed with 25kg of roasted wheat and soaked in 75 kg water at 75°C for 5 minutes. The soaked extrudates were then heated to 100°C and held at the same temperature for 10 minutes and afterwards cooled to below 40°C by applying vacuum. The cooked extrudates were mixed with a liquid suspension of 25g of Aspergillus oryzae spores inoculum followed by 340g of a culture of L.sake at 7 x 10⁵cfu/g of cooked extrudates.

During the 42 hours of koji fermentation, the following temperature profiles were maintained for the culture bed:

| | |
|---|---|
| 0 - 25 hours | 30°C |
| 25 - 42 hours | 27°C |

The koji was mixed at 18^{th} and 25^{th} hours to ensure sufficient airflow through the culture bed for good ventilation. The microbiological quality was very good during the fermentation where the coliform count was <10²cfu/g throughout. After the fermentation, the level of L.sake had risen to 3.3 x 10⁹cfu/g.

After the Koji fermentation, the matured Koji was harvested. Hydrolysis was carried out in a hydrolysis tank by adding water to obtain a hydrolysate with a total solid content of 20.2m/m. The hydrolysis was carried out at 35°C for 48 hours.

During the hydrolysis, a rapid pH drop (initial pH=6.4) was observed due to the growth of the L.sake. A pH of 6.0 was reached after approximately 2 hours of hydrolysis. Thereafter, a 40% NaOH solution was dosed in to maintain the pH at 6.0. The high count of L.sake observed in the Koji continued to dominate in the hydrolysate and the development of coliforms was again under good control.

Finally, the hydrolysed mixture was pressed to separate a wheat gluten sauce from a solid residue. Salt was added to a level of 12%m/m before pressing. The wheat gluten sauce was treated at 90°C for 20 minutes. The liquid sauce was concentrated by evaporation. The concentrate obtained was dried in a vacuum oven and then milled into a powder.

For organoleptic evaluation, 12.5g of liquid sauce or 3.5 g powder were diluted with 250 ml of boiling water. In both cases the product was found to have a meaty note background which does not have the disadvantage of the "fermented note". The product was very light in colour and was versatile in culinary applications.

### Example 2

A similar procedure to that described in Example 1 was followed except that the koji prepared according to Example 1 was mixed with wheat gluten powder (Koji:wheat gluten powder=7:3) in the hydrolysis. The water quantity was adjusted such that the dried matter content of the hydrolysate was 20.2%.

A higher level of sulphide was detected in the hydrolysate compared to Example 1. This is due to a higher protein content (TN=13.0%dried weight basis) compared to wheat gluten koji alone (TN=11.3%dried weight basis), which gave rise to a higher content of cysteine. The reduced carbohydrate content also reduced the availability of carbohydrate source for the metabolism of the L.sake. As a result, there was a higher uptake of cysteine and production of hydrogen sulphide. The hydrolysate had a strong meaty flavour.

### Example 3

A similar procedure to that described in Example 1 was followed except that the carbohydrate content was reduced in the substrate for Koji preparation. The mixture used was 85% wheat gluten, 5% of wheat bran and 10% of wheat flour. L.sake and A.oryzae were inoculated in the cooked substrate. The microbiological results showed that growth of L.sake was not affected by the change to reduced carbohydrate recipe. A higher level of sulphide was detected in the hydrolysate compared to Example 2 and the hydrolysate had a strong meaty flavour.

### Example 4

A similar procedure to that described in Example 3 was followed except that salt was not added in the hydrolysate, and a salt free sauce or powder was obtained with a strong meaty flavour.

### Example 5

A similar procedure to that described in Example 1 was followed except that the hydrolysis was carried out at 22°C for 10 days. A salt free sauce or powder was obtained with a strong meaty flavour.

### Example 6

A similar procedure to that described in Example 3 was followed except that the hydrolysis was extended to 5 days to increase the degree of hydrolysis. A salt free sauce or powder was obtained with a strong meaty flavour.

### Example 7

A similar procedure to that described in Example 2 was followed except that corn gluten powder was used instead of wheat gluten powder. A salt free sauce or powder was obtained with a strong meaty flavour.

### Example 8

The dried hydrolysate, described in Example 1 was used as base for an aromatisation agent for culinary products. For the preparation of this agent, 47.8 parts of the hydrolysate powder was mixed with 17.0 parts of water, 13.3 parts of salt, 8.3 parts of yeast extract, 1.1 parts of cysteine, 1.1 parts of thiamine, 0.8 parts of glucose and 0.1 parts of onion extract. The paste was heated in a double jacketed kettle for about 90 minutes at 100°C and dried under a reduced pressure of 15mbar to a dry matter level of 98%.

### Comparative Example

A similar procedure to that described in Example 1 was followed except that pH of the hydrolysis was kept floating, i.e. no pH adjustment. The pH of the hydrolysate dropped to 4.5 after 4 hours of hydrolysis. After 8 hours of hydrolysis, the pH was adjusted to 6 and maintained throughout the 48 hours of hydrolysis. With this pH profile, the level of sulphide was negligible throughout the 48 hours of hydrolysis. The corresponding sauce had a less meaty note than the product of Example 1.

These results indicate that the pH should be greater than 5.6 at least during the growth phase of L.sake (about 2-8 hours hydrolysis.

## Claims

1. A process for the production of a hydrolysate which comprises fermenting a protein containing material and a carbohydrate to form a Koji, hydrolysing the fermented Koji at a temperature between 2°C and 50°C and a pH of from 5.6 to 7.0 for a period of from 1 to 20 days **characterised in that** inoculation with a culture of L.sake at an inoculation density of from 10³ to 10⁷ cfu/g of fermented Koji is carried out at the beginning of the fermentation stage.

2. A process according to claim 1 wherein the fermented Koji is prepared by inoculating a protein containing material and a carbohydrate with, in addition to a culture of L.sake, a culture of Aspergillus oryzae and/or Aspergillus sojae on a culture bed to form the fermented Koji.

3. A process according to claim 1 wherein the protein containing material is a plant protein material containing a high proportion of cysteine.

4. A process according to claim 1 wherein the protein containing material is soya, wheat germ, corn gluten, rice gluten or wheat gluten

5. A process according to claim 1 wherein the protein containing material is a substrate containing from 30 to 100% of protein.

6. A process according to claim 1 wherein the protein containing material contains from 70 to 90% of protein.

7. A process according to claim 1 wherein the protein containing material is cooked and is used in solid particulate form for enabling the mould of Aspergillus oryzae and/or Aspergillus sojae to grow on the surface of the particles and eventually penetrate into the particles.

8. A process according to claim 1 wherein the protein containing material is fermented in the solid state.

9. A process according to claim 1 wherein the hydrolysis of the fermented protein koji in the presence of water is carried out in the absence or presence of salt.

10. A process according to claim 1 wherein the hydrolysis is carried out in the absence of salt at a temperature from 30° to 37°C over a period of from 2-5 days.

11. A process according to claim 1 wherein when salt is present, the amount is up to 100% by weight based on the weight of the fermented Koji.

12. A process according to claim 1 wherein additional protein containing a high proportion of cysteine is added at the beginning of hydrolysis.

13. A process according to claim 1 wherein, after the hydrolysis, the hydrolysed fermented koji together with the culture of L.sake is pressed to separate a liquid sauce from a solid residue.

14. A process according to claim 13 wherein the liquid sauce is pasteurised at a temperature of from 90° to 140°C for a period of from 15 seconds to 30 minutes and then filtered to give a liquid seasoning.

15. A process according to claim 13 wherein salt is added either before or after pressing to give a product having a salt content of 0-60% by weight based on the weight of dried matter.

16. A process according to claim 13 wherein the liquid sauce is made into a powder by concentration, then dried to a low moisture content and finally milled into a powder to give a solid seasoning.

17. A process for the preparation of a paste having a dry matter content of from 35 to 55% by weight for use as a base for an aromatisation agent in culinary products which comprises drying the hydrolysate prepared by the process of claim 1 and mixing with water, salt, reducing sugar and optionally a sulphur containing amino acid or thiamine, to give a paste containing, on a dry matter basis, from 24 to 97% of the hydrolysate, 2 to 40% salt, 1 to 4% reducing sugar and from 0 to 2% of a sulphur containing amino acid or thiamine.

18. A process according to claim 17 wherein the paste is heated at 80 to 150°C for from 1 minute to 4 hours.

19. A process for the preparation of a dry hydrolysate for use as a base for an aromatisation agent in culinary products which comprises drying the paste obtained as in claim 18 to a residual water level of up to 2%.

## Patentansprüche

1. Verfahren zur Herstellung eines Hydrolysats, das das Fermentieren eines proteinhaltigen Materials und eines Kohlenhydrats unter Bildung eines Koji, das Hydrolysieren des fermentierten Koji bei einer Temperatur zwischen 2°C und 50°C und einem pH von 5,6 bis 7,0 für einen Zeitraum von 1 bis 20 Tagen umfaßt, **dadurch gekennzeichnet, daß** zu Beginn der Fermentierungsstufe eine Beimpfung mit einer Kultur von L. sake bei einer Beimpfungsdichte von 10³ bis 10⁷ KBE/g des fermentierten Koji durchgeführt wird.

2. Verfahren nach Anspruch 1, wobei der fermentierte Koji dadurch hergestellt wird, daß man ein proteinhaltiges Material und ein Kohlenhydrat, zusätzlich zu einer Kultur von *L. sake*, mit einer Kultur von *Aspergillus oryzae* und/oder *Aspergillus sojae* auf einem Kulturbett beimpft, um den fermentierten Koji zu bilden.

3. Verfahren nach Anspruch 1, wobei das proteinhaltige Material ein Pflanzenproteinmaterial ist, das einen hohen Anteil an Cystein enthält.

4. Verfahren nach Anspruch 1, wobei das proteinhaltige Material Soja, Weizenkeim, Maisgluten, Reisgluten oder weizengluten ist.

5. Verfahren nach Anspruch 1, wobei das proteinhaltige Material ein Substtrat ist, das von 30 bis 100 % Protein enthält.

6. Verfahren nach Anspruch 1, wobei das proteinhaltige Material von 70 bis 90 % Protein enthält.

7. Verfahren nach Anspruch 1, wobei das proteinhaltige Material gekocht und in einer festen teilchenförmigen Form verwendet wird, um es dem Schimmel von *Aspergillus oryzae* und/oder *Aspergillus sojae* zu ermöglichen, auf der Oberfläche der Teilchen zu wachsen und schließlich in die Teilchen einzudringen.

8. Verfahren nach Anspruch 1, wobei das proteinhaltige Material im festen Zustand fermentiert wird.

9. Verfahren nach Anspruch 1, wobei die Hydrolyse des fermentierten Protein-Koji in Gegenwart von Wasser in Abwesenheit oder in Gegenwart von Salz durchgeführt wird.

10. Verfahren nach Anspruch 1, wobei die Hydrolyse in Abwesenheit von Salz bei einer Temperatur von 30 bis 37°C innerhalb eines Zeitraums von 2 bis 5 Tagen durchgeführt wird.

11. Verfahren nach Anspruch 1, wobei dann, wenn Salz anwesend ist, die Menge bis zu 100 Gew.-%, bezogen auf das Gewicht des fermentierten Koji, beträgt.

12. Verfahren nach Anspruch 1, wobei bei Beginn der Hydrolyse zusätzliches Protein, das einen hohen Anteil an Cystein enthält, zugegeben wird.

13. Verfahren nach Anspruch 1, wobei nach der Hydrolyse der hydrolysierte fermentierte Koji zusammen mit der Kultur von *L. sake* abgepreßt wird, um eine flüssige Soße von einem festen Rückstand abzutrennen.

14. Verfahren nach Anspruch 13, wobei die flüssige Soße bei einer Temperatur von 90 bis 140°C für einen Zeitraum von 15 s bis 30 min pasteurisiert und dann filtriert wird, um eine flüssige Würze zu erhalten.

15. Verfahren nach Anspruch 13, wobei entweder vor oder nach dem Abpressen Salz zugesetzt wird, um ein Produkt mit einem Salzgehalt von 0 bis 60 Gew.-%, bezogen auf das Gewicht der Trockenmasse, zu erhalten.

16. Verfahren nach Anspruch 13, wobei die flüssige Soße durch Konzentrieren, dann Trocknen bis auf einen niedrigen Feuchtigkeitsgehalt und schließlich Vermahlen zu Pulver in ein Pulver überführt wird, um eine feste Würze zu erhalten.

17. Verfahren zur Herstellung einer Paste mit einem Trockenmassegehalt von 35 bis 55 Gew.-% zur Verwendung als Basis für ein Aromatisierungsmittel in kulinarischen Produkten, das das Trocknen des nach dem Verfahren von Anspruch 1 hergestellten Hydrolysats und Mischen mit Wasser, Salz, reduzierendem Zucker und ggf. einer schwefelhaltigen Aminosäure oder Thiamin umfaßt, um eine Paste zu erhalten, die, auf Trockenmassebasis, von 24 bis 97 % Hydrolysat, 2 bis 40 % Salz, 1 bis 4 % reduzierenden Zucker und von 0 bis 2 % schwefelhaltige Aminosäure oder Thiamin enthält.

18. Verfahren nach Anspruch 17, wobei die Paste für von 1 Minute bis zu 4 Stunden auf 80 bis 150°C erhitzt wird.

19. Verfahren zur Herstellung eines trockenen Hydrolysats zur Verwendung als Basis für ein Aromatisierungsmittel in kulinarischen Produkten, das das Trocknen der wie in Anspruch 18 erhaltenen Paste auf einen Restwassergehalt von bis zu 2 % umfaßt.

## Revendications

1. Procédé de préparation d'un hydrolysat, comprenant la fermentation d'une matière contenant des protéines et d'un glucide pour former un Koji, l'hydrolyse du Koji fermenté à une température comprise entre 2°C et 50°C et à un pH de 5,6 à 7,0 pendant une durée de 1 à 20 jours, **caractérisé en ce qu'**on effectue une inoculation avec une culture de L.sake à une densité d'inoculation de 10³ à 10⁷ ufc/g de Koji fermenté au début du stade de la fermentation.

2. Procédé selon la revendication 1, dans lequel on prépare le Koji fermenté en inoculant, en plus d'une culture de L.sake, une culture d'Aspergillus oryzae et/ou d'Aspergillus sojae dans une matière contenant des protéines et un glucide sur un lit de culture pour former le Koji fermenté.

3. Procédé selon la revendication 1, dans lequel la matière contenant des protéines est une matière protéinique végétale contenant une proportion élevée de cystéine.

4. Procédé selon la revendication 1, dans lequel la matière contenant des protéines est du soja, des germes de blé, du gluten de maïs, du gluten de riz ou du gluten de blé.

5. Procédé selon la revendication 1, dans lequel la matière contenant des protéines est un substrat contenant de 30 à 100 % de protéines.

6. Procédé selon la revendication 1, dans lequel la matière contenant des protéines contient de 70 à 90 % de protéines.

7. Procédé selon la revendication 1, dans lequel on cuit la matière contenant des protéines et on l'utilise sous la forme de particules solides pour permettre à la moisissure d'Aspergillus oryzae et/ou d'Aspergillus sojae de se développer à la surface des particules et finalement de pénétrer dans les particules.

8. Procédé selon la revendication 1, dans lequel on fait fermenter la matière contenant des protéines à l'état solide.

9. Procédé selon la revendication 1, dans lequel on effectue l'hydrolyse du Koji fermenté de protéines en présence d'eau et en l'absence ou en présence d'un sel.

10. Procédé selon la revendication 1, dans lequel on effectue l'hydrolyse en l'absence de sel à une température de 30 à 37°C pendant une durée de 2 à 5 jours.

11. Procédé selon la revendication 1, dans lequel, quand du sel est présent, sa quantité va jusqu'à 100 % en poids par rapport au poids du Koji fermenté.

12. Procédé selon la revendication 1, dans lequel on ajoute une protéine supplémentaire contenant une proportion élevée de cystéine au début de l'hydrolyse.

13. Procédé selon la revendication 1, dans lequel, après l'hydrolyse, on presse le Koji fermenté hydrolysé conjointement avec la culture de L.sake pour séparer une sauce liquide à partir d'un résidu solide.

14. Procédé selon la revendication 13, dans lequel on pasteurise la sauce liquide à une température de 90 à 140°C pendant une durée de 15 secondes à 30 minutes et ensuite on la filtre pour obtenir un assaisonnement liquide.

15. Procédé selon la revendication 13, dans lequel on ajoute un sel avant ou après le pressage pour obtenir un produit ayant une teneur en sel de 0 à 60 % en poids par rapport au poids de la matière séchée.

16. Procédé selon la revendication 13, dans lequel on transforme la sauce liquide en une poudre par concentration, ensuite on la sèche jusqu'à l'obtention d'une faible teneur en humidité et enfin on la broie en une poudre pour obtenir un assaisonnement solide.

17. Procédé de préparation d'une pâte ayant une teneur en matière sèche de 35 à 55 % en poids pour une utilisation en tant que base pour un agent d'aromatisation dans des produits culinaires, comprenant le séchage de l'hydrolysat préparé au moyen du procédé selon la revendication 1, et un mélange avec de l'eau, un sel, un sucre réducteur et éventuellement un aminoacide contenant du soufre ou de la thiamine, pour obtenir une pâte contenant, sur la base des matières sèches, de 24 à 97 % de l'hydrolysat, 2 à 40 % de sel, 1 à 4 % de sucre réducteur et de 0 à 2 % d'un aminoacide contenant du soufre ou de thiamine.

18. Procédé selon la revendication 17, dans lequel on chauffe la pâte à une température de 80 à 150°C pendant une durée de 1 minute à 4 heures.

19. Procédé de préparation d'un hydrolysat sec pour une utilisation en tant que base pour un agent d'aromatisation dans des produits culinaires, comprenant le séchage de la pâte obtenue comme dans la revendication 18 jusqu'à un taux résiduel d'eau allant jusqu'à 2 %.
